# EUROPEAN PATENT SPECIFICATION

(11) **EP 2 668 449 B1**
(45) Date of publication and mention of the grant of the patent: **02.01.2019**
(21) Application number: 11857140.5
(22) Date of filing: 30.11.2011
(51) Int. Cl.: F24F 11/00

(54) **ADJUSTMENT AND LOCKING MEANS FOR A DAMPER PLATE OF A VENTILATION DEVICE**
EINSTELLUNGS- UND VERRIEGELUNGSMITTEL FÜR EIN DÄMPFUNGSBLECH EINER BELÜFTUNGSVORRICHTUNG
MOYEN D'AJUSTEMENT ET DE VERROUILLAGE POUR UNE PLAQUE D'AMORTISSEMENT D'UN DISPOSITIF DE VENTILATION

(30) Priority: 25.01.2011 FI 20115066
(43) Date of publication of application: 04.12.2013
(73) Proprietor: FläktGroup Sweden AB, 551 84 Jönköping (SE)
(72) Inventor: SAARI, Vesa, FI-37800 Toijala (FI)
(74) Representative: Heinänen Oy Patent Agency
(86) International application number: PCT/FI2011/051060
(87) International publication number: WO 2012/101317

(56) References cited:
- FI-B- 90 692
- FI-C- 90 692
- GB-A- 1 602 431
- GB-A- 1 602 431
- JP-A- 5 272 797
- JP-A- H05 272 797

## Description

The object of this invention is an adjustment and locking means of a ventilation device, by the aid of which means the damper plate, or the like, of the ventilation device is adjusted, which damper plate is connected by the aid of a cable, wire or the like to the slide of the adjustment and locking means, which slide is arranged into an elongated groove of the body of the adjustment and locking means in a manner that allows said slide to be moved, and which adjustment and locking means also comprises a setting means, by the aid of which the slide, and therefore also the wire, is moved and the desired position is locked.

The invention thus relates to a device for ventilation, e.g. to a regulating box, which comprises a damper plate or the like for the purpose of adjusting the air flow. A damper plate is typically situated inside a regulating box near the inlet duct, so that access to it is difficult. Various adjustment mechanisms have been developed for this purpose. For example, a wire is fixed to the damper plate, to the other end of which wire an adjustment and locking means is installed, which in turn can be disposed in a location to which it is easy to gain access.

By the aid of the adjustment and locking means the damper plate is moved in the longitudinal direction of the inlet duct, in which case in the minimum flow position the damper plate, which can also be a perforated plate, covers the duct. When the flow is increased, by the aid of the adjustment and locking means the damper plate is adjusted farther away from the inlet duct inwards in the regulating box. These types of adjustment and locking means are known in the art. Typical to all of these is that the adjustment is made with the same accuracy for the whole distance of the adjustment movement. In the adjusting of an air flow, however, it is known in the art that the air flow changes relatively most near the closing position. When the aperture gets larger than this, the change in air flow is no longer in relation as great. In this case a very great measurement accuracy is not therefore needed. On the other hand, at the very start the adjustment movement must be precisely controlled.

JP H05 272797 discloses the preamble of claim 1.

The aim of the present invention is to achieve an adjustment and locking means of a ventilation device, with which means the adjusting movement is sufficiently accurate in all adjustment positions. The adjustment and locking means according to the invention is characterized in that the outer surface of the body of the adjustment and locking means comprises threads, into which the protrusion or protrusions on the inner surface of the setting means can be screwed, and that a part of the thread extends to only a part of the outer rim of the body of the adjustment and locking means.

One preferred embodiment of the adjustment and locking means according to the invention is characterized in that between the thread parts, which do not extend around the whole rim of the body, on the outer rim of the body are one or more, preferably two, indentations in the longitudinal direction of the body, in which indentations the protrusion or protrusions of the inner surface of the setting means is/are able to move.

Another preferred embodiment of the adjustment and locking means according to the invention is characterized in that the thread of the outer rim of the body of the adjustment and locking means is unbroken, i.e. it extends around essentially the whole rim, in the starting part of the adjustment area, and that the thread in the other part of the adjustment area extends to only a part of the rim of the body of the adjustment and locking means.

Yet another preferred embodiment of the invention is characterized in that the starting part of the adjustment area, in which the thread is unbroken, is approx. 10-20% of the length of the whole adjustment area.

One of the advantages of the invention that can be mentioned is that in the critical adjustment area the adjustment can be made extremely accurately, while in the other areas the adjustment can be made and locked quickly.

In the following, the invention will be described in more detail by the aid of a preferred embodiment with reference to the attached drawings, wherein:
Fig. 1 presents a simplification of the intended application of the adjustment and locking means according to the invention.
Fig. 2 presents the same as Fig. 1, but in a different adjustment position.
Fig. 3 presents a disassembled adjustment and locking means according to the invention.
Fig. 4 presents an assembled adjustment and locking means according to the invention.
Fig. 5 presents the same as Fig. 4, but viewed from a different direction.

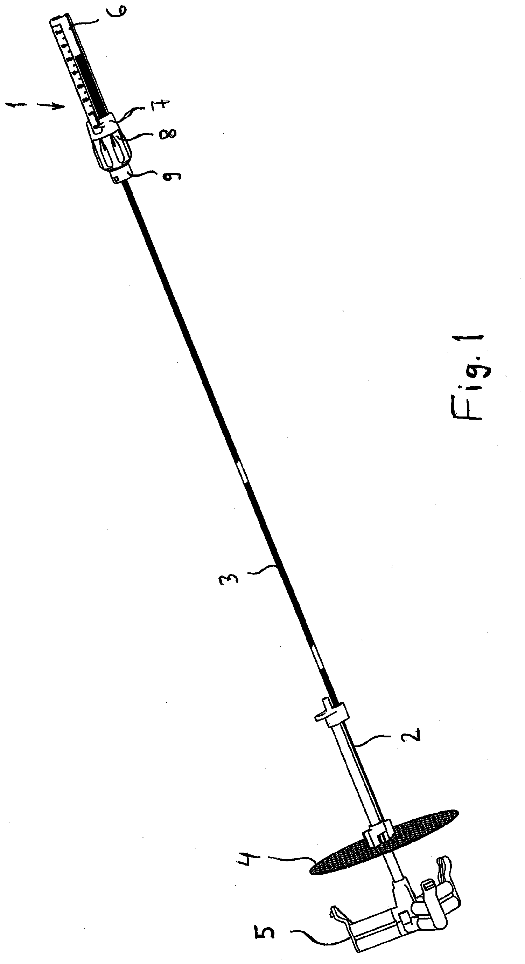

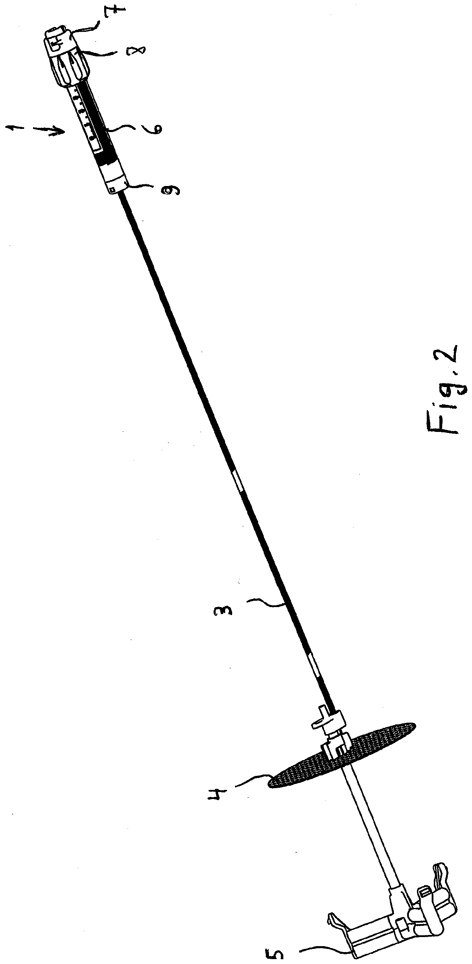

Fig. 1 presents, with the reference number 1, an adjustment and locking means according to the invention. A cable or wire 2, which is mostly inside the shell 3 and which can be moved in its longitudinal direction, is fixed to said means. The shell does not move, but instead is fixed in its position. The wire, therefore, is able to move inside the shell. A damper plate 4 is fixed to the second end of the wire 2, which damper plate is thus moved by the aid of the adjustment and locking means 1. In the situation of Fig. 1 the damper plate 4 is in the so-called closing position. The drawings do not present the regulating box, inside which the damper plate in question is installed. When the damper plate is in the closing position of Fig. 1, it essentially covers/closes the inlet duct entering the regulating box. When the adjustment and locking means is used in the manner described later, it moves the wire 2 such that the damper plate 4 moves to the right in the figure, i.e. it opens the duct to the air flow. A second extreme position, i.e. the fully-open position, is presented in Fig. 2.

The reference number 5 presents the measuring device of air flow, which is *per se* conventional and does not itself relate to the invention. For this reason its operation is not described in more detail here.

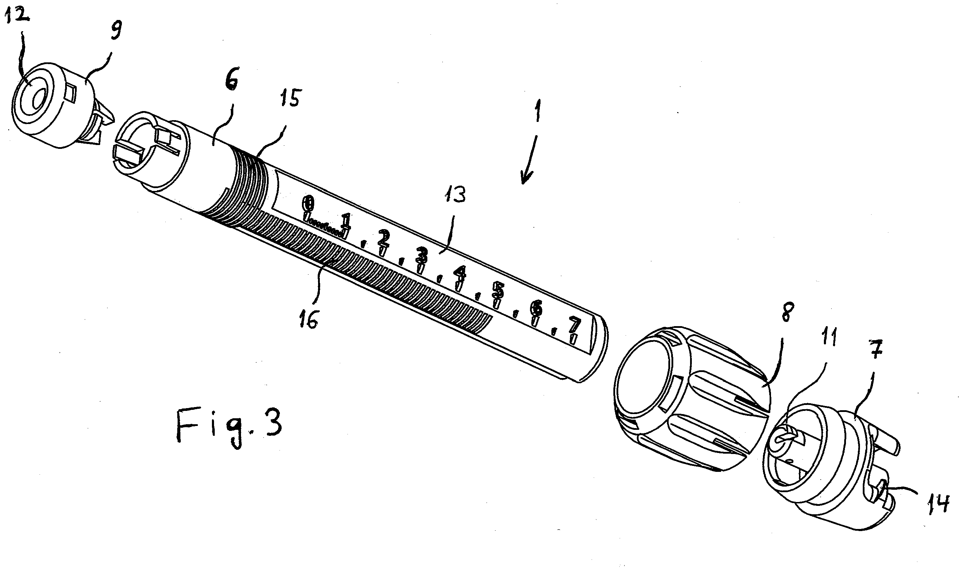

Fig. 3 presents a disassembled adjustment and locking means 1 according to the invention. The adjustment and locking means comprises a body 6, a slide 7, a setting means 8 and also a detent part 9 of the shell 3.

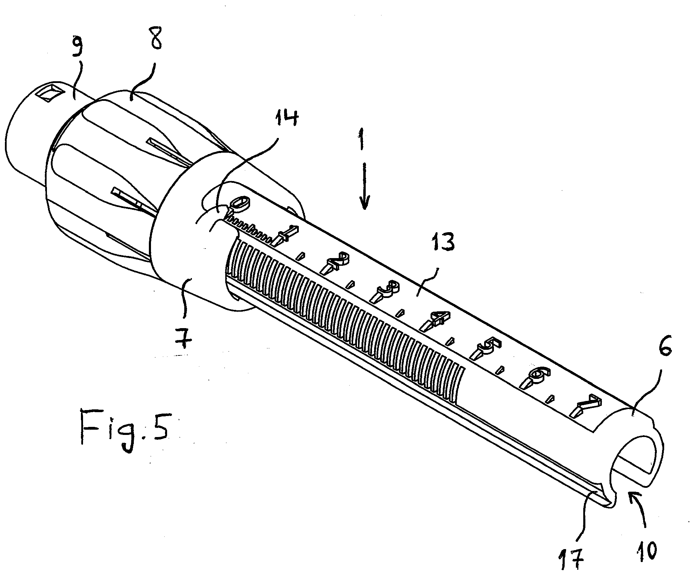

The body 6 of the adjustment and locking means is hollow and contains an elongated groove 10 (Fig. 5). The slide 7 is placed into the groove such that it is not able to rotate, but moves in the longitudinal direction of the body. The wire 2 is fixed to the fixing tip 11 of the slide 7. The setting means 8, by the aid of which the actual adjustment is made, is installed partly on top of the slide 7. The setting means 8 and the slide 7 lock to each other such that when the setting means 8 is moved in the longitudinal direction of the body 6, the slide 7 moves along with it. The detent part 9 of the shell 3 snaps into the body 6. The shell 3 surrounding the wire thus disposes itself in the recess in the detent part 9 and is not able to move its the longitudinal direction, because movement is also prevented at the damper plate 4 end.

A graduated scale 13 of adjustment is made on the body 6. The slide 7 correspondingly comprises a measurement pointer 14, which shows the adjustment value at any given time. At the starting end of the graduated scale the display of the adjustment value of the gauge is more precise than in the other part.

In addition, the outer rim of the body is provided with threads 15, 16. Of these, the thread 15 is unbroken and its length on the outer rim of the body corresponds to the length of the more accurate adjustment value display of the graduated scale 13. The other part of the thread extends to only a part of the outer rim of the body 6. The setting means 8 comprises on the inner surface a protrusion or protrusions or the like (not presented in the figures), which correspond to the threads of the outer rim of the body such that the setting means can be rotated in the threads 15, 16. The body 6 also comprises one or more, preferably two, indentations 17 in the longitudinal direction of the body, which extend from the end of the body up to the unbroken thread 15. What is essential is that the indentations 17 extend at least to that area in which an adjustment is made by moving the setting means in the longitudinal direction of the body 6 without an actual rotational movement.

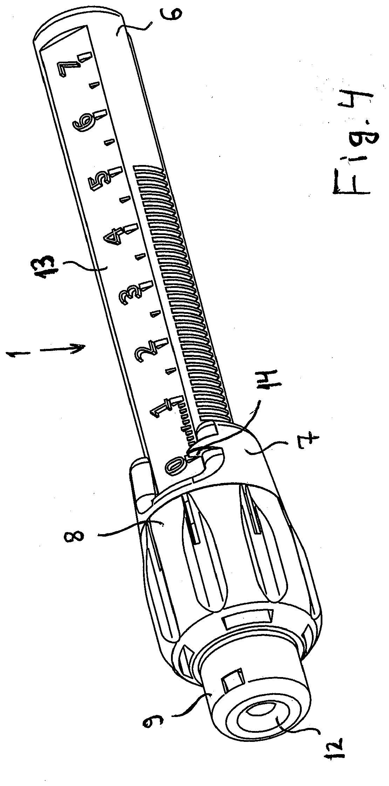

Figs. 4 and 5 present an adjustment and locking means 1 when assembled. In both figures the adjustment and locking means is in the position in which the damper plate 4 is in the closed position (Fig. 1). The setting means 8 can be rotated from this position as long as there is sufficient unbroken thread 15. In this case the setting means 8 of course moves in the longitudinal direction of the body 6 and at the same time transfers the slide 7, which in turn moves the wire 2. The wire pulls the damper plate 4 in the open direction.

When the unbroken thread 15 ends, the setting means 8 no longer rotates. In this case the setting means 8 is in a position in which the protrusions on its inside are at the point of the indentations 17. In this position the setting means can be transferred in the longitudinal direction of the body and the desired adjustment value can be sought. When this adjustment value is achieved the adjustment value is locked by turning the setting means such that the protrusions on the inside of it partially hit the thread 16 and lock to it. A new adjustment is made again such that the setting means 8 is turned to release from the locking such that the protrusions settle into the point of the indentations 17, and the setting means is transferred in the direction of the body to the desired point and the setting means is turned into the locking position into the thread 16.

At the point of the unbroken thread 15 the adjustment can therefore be made extremely accurately by turning the setting means to the desired point. After that the adjustment can be done notch by notch, when the adjustment value changes by at least the amount of the pitch of the thread. A more precise adjustment value is therefore obtained near the closing position of the damper plate, where the relative change in air flow is more pronounced. In other words, just a very small adjustment movement considerably affects the air flow. The area of unbroken thread is e.g. approx. 10-20% of the whole adjustment area.

The invention is described above in connection with a regulating box. It is obvious that also other ventilation devices in which the air flow is adjusted come into the scope. The invention can also be applied to a turning check plate.

It is obvious to the person skilled in the art that the invention is not limited to the embodiments presented above, but that it can be varied within the scope of the claims presented below. A spring, which tries e.g. to push the damper plate towards the closing position, can be connected to the damper plate 4. In this case the wire 2 resists the pushing force.

The characteristic features possibly presented in the description in conjunction with other characteristic features can, if necessary, be used separately to each other.

## Claims

1. An adjustment and locking means (1) of a ventilation device, by the aid of which means a damper plate (4) of the ventilation device is adjusted, the adjustment and locking means (1) comprising a slide (7) and an elongated groove (10), whereby the damper plate (4) is connected by the aid of a wire (2) to the slide (7), which is arranged into the elongated groove (10) in a manner that allows it to be moved, and which adjustment and locking means also comprises a setting means (8), by the aid of which the slide (7), and therefore also the wire (2), is moved and the desired position is locked, **characterized in that** the outer surface of the body (6) of the adjustment and locking means (1) comprises threads (15, 16), into which the protrusion or protrusions on the inner surface of the setting means (8) can be screwed, and **in that** a part of the thread (16) extends to only a part of the outer rim of the body (6) of the adjustment and locking means.

2. An adjustment and locking mechanism according to claim 1, **characterized in that** between the thread parts (16), which do not extend around the whole rim of the body (6), on the outer rim of the body (6) are one or more, preferably two, indentations (17) in the longitudinal direction of the body, in which indentations the protrusion or protrusions of the inner surface of the setting means (8) is/are able to move.

3. An adjustment and locking means according to claim 1, **characterized in that** the thread (15) of the outer rim of the body (6) of the adjustment and locking means (1) is unbroken, i.e. it extends around essentially the whole rim, in the starting part of the adjustment area, and **in that** the thread (16) in the other part of the adjustment area extends to only a part of the outer rim of the body (6) of the adjustment and locking means.

4. An adjustment and locking means according to claim 2, **characterized in that** the starting part of the adjustment area, in which the thread (15) is unbroken, is approx. 10-20% of the length of the whole adjustment area.

5. An adjustment and locking means according to any of claims 1-3, **characterized in that** a graduated scale (13) of adjustment values is made on the body of the adjustment and locking means (1), and **in that** the slide (7) comprises a corresponding measurement pointer (14) of the adjustment values.

6. An adjustment and locking means according to any of claims 1-4, **characterized in that** a shell (3) is installed around the wire (2), in which case the wire (2) is arranged movably in its longitudinal direction in relation to the shell (3).

## Patentansprüche

1. Anpassungs- und Verriegelungsmittel (1) einer Ventilationsvorrichtung, wobei mit Hilfe des Mittels eine Dämpferplatte (4) der Ventilationsvorrichtung angepasst wird, das Anpassungs- und Verriegelungsmittel (1) umfasst einen Schlitten (7) und eine längliche Nut (10), wobei die Dämpferplatte (4) mit Hilfe eines Drahts (2) mit dem Schlitten (7) verbunden ist, der so in der länglichen Nut (10) angeordnet ist, eine Bewegung zu erlauben, und wobei das Anpassungs- und Verriegelungsmittel weiterhin ein Einstellmittel (8) umfasst, mit Hilfe dessen der Schlitten (7), und somit auch der Draht (2), bewegt wird und die gewünschte Position verriegelt wird, **dadurch gekennzeichnet, dass** die äußere Fläche des Körpers (6) des Anpassungs- und Verriegelungsmittels (1) Gewinde (15, 16) umfasst, in die der Vorsprung oder die Vorsprünge auf der inneren Fläche des Einstellmittels (8) geschraubt werden können, und dadurch, dass sich ein Teil des Gewindes (16) lediglich über einen Teil des äußeren Rands des Körpers (6) des Anpassungs- und Verriegelungsmittels erstreckt.

2. Anpassungs- und Verriegelungsmittel nach Anspruch 1, **dadurch gekennzeichnet, dass** zwischen den Gewindeteilen (16), die sich um den gesamten Rand des Körpers (6) erstrecken, auf dem äußeren Rand des Körpers (6) eine oder mehr, bevorzugt zwei, Vertiefungen (17) in longitudinaler Richtung des Körpers vorhanden sind, wobei in den Vertiefungen der Vorsprung oder die Vorsprünge der inneren Fläche des Einstellmittels (8) beweglich ist/sind.

3. Anpassungs- und Verriegelungsmittel nach Anspruch 1, **dadurch gekennzeichnet, dass** das Gewinde (15) des äußeren Rands des Körpers (6) des Anpassungs- und Verriegelungsmittels (1) ununterbrochen, d.h. es erstreckt sich um im Wesentlichen den gesamten Rand, in dem Anfangsabschnitt des Anpassungsbereichs ausgebildet ist, und dadurch, dass sich das Gewinde (16) in dem anderen Abschnitt des Anpassungsbereichs zu lediglich einem Teil des äußeren Rands des Körpers (6) des Anpassungs- und Verriegelungsmittels (1) erstreckt.

4. Anpassungs- und Verriegelungsmittel nach Anspruch 2, **dadurch gekennzeichnet, dass** der Anfangsabschnitt des Anpassungsbereichs, in dem das Gewinde (15) ununterbrochen ist, ungefähr 10 - 20 % der Länge des gesamten Anpassungsbereichs ist.

5. Anpassungs- und Verriegelungsmittel nach einem der Ansprüche 1 bis 3, **dadurch gekennzeichnet, dass** eine abgestufte Skala (13) von Anpassungswerten auf dem Körper des Anpassungs- und Verriegelungsmittels (1) ausgebildet ist, und dadurch, dass der Schlitten (7) einen korrespondierenden Messzeiger (14) der Anpassungswerte umfasst.

6. Anpassungs- und Verriegelungsmittel nach einem der Ansprüche 1 bis 4, **dadurch gekennzeichnet, dass** ein Mantel (3) um den Draht (2) angeordnet ist, in dem der Draht (2) beweglich in seiner longitudinalen Richtung relativ zu dem Mantel (3) angeordnet ist.

## Revendications

1. Moyen d'ajustement et de verrouillage (1) d'un dispositif de ventilation, à l'aide duquel une plaque d'amortissement (4) du dispositif de ventilation est ajustée, le moyen d'ajustement et de verrouillage (1) comprenant un coulisseau (7) et une rainure oblongue (10), la plaque d'amortissement (4) étant reliée à l'aide d'un fil (2) au coulisseau (7), qui est disposé dans la rainure oblongue (10) de manière à pouvoir être déplacé, le moyen d'ajustement et de verrouillage comprenant également un moyen de réglage (8) à l'aide duquel le coulisseau (7), et donc aussi le fil (2), est déplacé et la position souhaitée est verrouillée, **caractérisé en ce que** la surface extérieure du corps (6) du moyen d'ajustement et de verrouillage (1) comprend des filetages (15, 16) dans lesquels la ou les saillies prévues sur la surface intérieure du moyen de réglage (8) peuvent être vissées, et **en ce qu'**une partie du filetage (16) s'étend seulement sur une partie du bord extérieur du corps (6) du moyen d'ajustement et de verrouillage.

2. Moyen d'ajustement et de verrouillage selon la revendication 1, **caractérisé en ce qu'**entre les parties de filetage (16) qui ne s'étendent pas autour de tout le bord du corps (6), il y a sur le bord extérieur du corps (6) une ou plusieurs, de préférence deux entailles (17) dans le sens longitudinal du corps, dans lesquelles la ou les saillies de la surface intérieure du moyen de réglage (8) sont aptes à se déplacer.

3. Moyen d'ajustement et de verrouillage selon la revendication 1, **caractérisé en ce que** le filetage (15) du bord extérieur du corps (6) du moyen d'ajustement et de verrouillage (1) est ininterrompu, c'est-à-dire qu'il s'étend quasiment autour de tout le bord, au début de la zone d'ajustement, et **en ce que** le filetage (16) dans l'autre partie de la zone d'ajustement s'étend seulement sur une partie du bord extérieur du corps (6) du moyen d'ajustement et de verrouillage.

4. Moyen d'ajustement et de verrouillage selon la revendication 2, **caractérisé en ce que** le début de la zone d'ajustement dans laquelle le filetage (15) est ininterrompu représente approximativement 10-20 % de la longueur de la surface d'ajustement totale.

5. Moyen d'ajustement et de verrouillage selon l'une quelconque des revendications 1 à 3, **caractérisé en ce qu'**une échelle graduée (13) de valeurs d'ajustement est réalisée sur le corps du moyen d'ajustement et de verrouillage (1), et **en ce que** le coulisseau (7) comprend un index de mesure correspondant (14) des valeurs d'ajustement.

6. Moyen d'ajustement et de verrouillage selon l'une quelconque des revendications 1 à 4, **caractérisé en ce qu'**une gaine (3) est installée autour du fil (2), auquel cas le fil (2) est disposé mobile dans son sens longitudinal par rapport à la gaine (3).
